# EUROPÄISCHE PATENTANMELDUNG

(11) **EP 4 749 029 A1**
(43) Veröffentlichungstag der Anmeldung: **27.05.2026**
(21) Anmeldenummer: 25216272.2
(22) Anmeldetag: 17.11.2025
(51) Int. Cl.: E02B 15/00, E21B 43/01

(54) **VORRICHTUNG ZUM AUFNEHMEN VON ÖLREICHEN FLÜSSIGKEITEN**

(30) Priorität: 22.11.2024 DE 202024106759 U
(71) Anmelder: Koormann, Hermann, 26605 Aurich (DE)
(72) Erfinder: Koormann, Hermann, 26605 Aurich (DE)
(74) Vertreter: Jabbusch, Matthias

(57) **Zusammenfassung**

Bei einer Vorrichtung zum Aufnehmen von ölreichen Flüssigkeiten von zumindest einer Austrittsstelle unterhalb der Wasseroberfläche ist vorgesehen, dass sie zumindest einen Trichterkörper aufweist, dessen seiner Öffnung abgewandter verengter Abschnitt mit zumindest einer Flüssigkeitsabführleitung flüssigkeitsleitend verbunden ist.

Mit dieser Vorrichtung können ölreiche Flüssigkeiten unterhalb einer Wasseroberfläche aufgenommen werden und insbesondere einer Verwertung zugeführt werden.

## Beschreibung

Die Erfindung betrifft eine Vorrichtung zum Aufnehmen von ölreichen Flüssigkeiten von zumindest einer Austrittsstelle unterhalb einer Wasseroberfläche.

Die Verschmutzung von Wasseroberflächen durch ölreiche Flüssigkeiten ist ein allgemein anerkanntes Problem. Gerade im Bereich von Küsten, oder in Flüssen können durch ölreiche Flüssigkeiten beispielsweise nach Schiffsunglücken oder nach Pipelinelecks ganze Meeresabschnitte und Küstenabschnitte oder Uferbereiche mit Öl verseucht werden.

Dabei kann eine Quelle von ölreichen Flüssigkeiten unterhalb einer Wasseroberfläche liegen. Wenn beispielsweise ein Schiff mit ölreichen Flüssigkeiten an Bord gesunken ist, dann können diese ölreichen Flüssigkeiten aus dem Schiff austreten und an die Oberfläche steigen. Möglich ist auch eine Beschädigung einer an einem Meeresgrund oder auf dem Boden eines Flusses verlegten Pipeline. Auch aus dieser kann Öl durch ein Leck zur Wasseroberfläche steigen und sich dort als Ölteppich ausbreiten.

Der Erfindung liegt die Aufgabe zugrunde, eine eingangs genannte Vorrichtung zum Aufnehmen von ölreichen Flüssigkeiten zu schaffen, mit der aus zumindest einer Austrittsstelle austretende ölreiche Flüssigkeiten unterhalb einer Wasseroberfläche aufnehmbar sind und insbesondere einer Verwertung zuführbar sind.

Diese Aufgabe ist erfindungsgemäß dadurch gelöst, dass die Vorrichtung zumindest einen Trichterkörper aufweist, dessen seiner Öffnung abgewandter verengter Abschnitt mit zumindest einer Flüssigkeitsabführleitung flüssigkeitsleitend verbunden ist.

Die erfindungsgemäße Vorrichtung weist einen Trichterkörper auf, der wie jeder Trichter eine weite Öffnung hat. Diese weite Öffnung kann einer Austrittsstelle von ölreicher Flüssigkeit zugeordnet werden in der Weise, dass die ölreiche Flüssigkeit aufgrund ihrer geringeren Dichte als die Dichte des Wassers nach oben in den Trichterkörper hinein aufsteigt. Der Trichter wird also oberhalb der Austrittsstelle der ölreichen Flüssigkeit positioniert, er kann dabei Abmessungen von mehreren Metern aufweisen, um auch ein entsprechend großes Leck zum Beispiel in einer Leitung oder in einem Schiff abzudecken. Der Trichterkörper verengt sich zu einem Abschnitt mit geringer Weite, an diesen ist erfindungsgemäß eine Flüssigkeitsabführleitung angeschlossen.

In den Trichterkörper eingeführte ölreiche Flüssigkeit wird weiter in die Flüssigkeitsabführleitung geführt. Diese Flüssigkeitsabführleitung kann einen Durchmesser von 1 bis 1,5 Metern haben, damit es innerhalb dieser Flüssigkeitsleitung nicht zu Stauerscheinungen kommt.

Die Flüssigkeitsabführleitung kann als Saugleitung ausgebildet sein, es kann also noch ein Saugdruck an die Flüssigkeitsleitung angelegt werden. Es ist aber auch möglich, dass die ölreiche Flüssigkeit allein aufgrund ihrer geringeren Dichte in der Flüssigkeitsleitung nach oben steigt.

Eine nächste Weiterbildung der Erfindung sieht vor, dass die Flüssigkeitsleitung bis zur Wasseroberfläche geführt ist und dass sich der Durchmesser der Flüssigkeitsabführleitung vor Erreichen der Wasseroberfläche verengt. Diese Verengung des Durchmessers führt zur Ausbildung eines Öl-Wasser-Abscheiders. Das Öl tritt in den verengten Abschnitt ein, das Wasser verbleibt im weiteren Leitungsabschnitt.

Eine nächste Weiterbildung der Erfindung sieht vor, dass die Flüssigkeitsabführleitung bis zu zumindest einem auf der Wasseroberfläche angeordneten Auffangbehälter geführt ist. Bei dem Auffangbehälter kann es sich beispielsweise um eine Wanne handeln, die auf der Wasseroberfläche schwimmend angeordnet ist. Die Flüssigkeitsabführleitung kann mit ihrem verengten Abschnitt in diese Wanne hineingeführt werden und dort einen Überlauf ausbilden. Die ölreiche Flüssigkeit kann aus dem offenen Ende der Flüssigkeitsabführleitung auslaufen und dann in dem Auffangbehälter aufgenommen werden, aus dem kann sie dann abgesaugt werden.

Zur weiteren Ausbildung der Erfindung kann noch vorgesehen sein, dass die Wände des Trichters aus einem Kunststoff oder aus einem Metall gefertigt sind. Schließlich kann am Trichter zumindest ein Ansatzpunkt für ein Seil und/oder eine Kette vorhanden sein. Vorzugsweise sind mehrere Ansatzpunkte vorgesehen, um den Trichter auch bei Strömungsverhältnissen lagerfest oberhalb der Austrittsstelle der ölreichen Flüssigkeit anzuordnen.

Ein Ausführungsbeispiel der Erfindung ist in der Zeichnung dargestellt. Es zeigen:
- Figur 1:: eine schematische Ansicht einer erfindungsgemäßen Vorrichtung oberhalb einer Austrittstelle ölreicher Flüssigkeit;
- Figur 2:: eine Seitenansicht eines Bauteils der Vorrichtung nach Figur 1;
- Figur 3:: eine Draufsicht auf das Bauteil nach Figur 1.

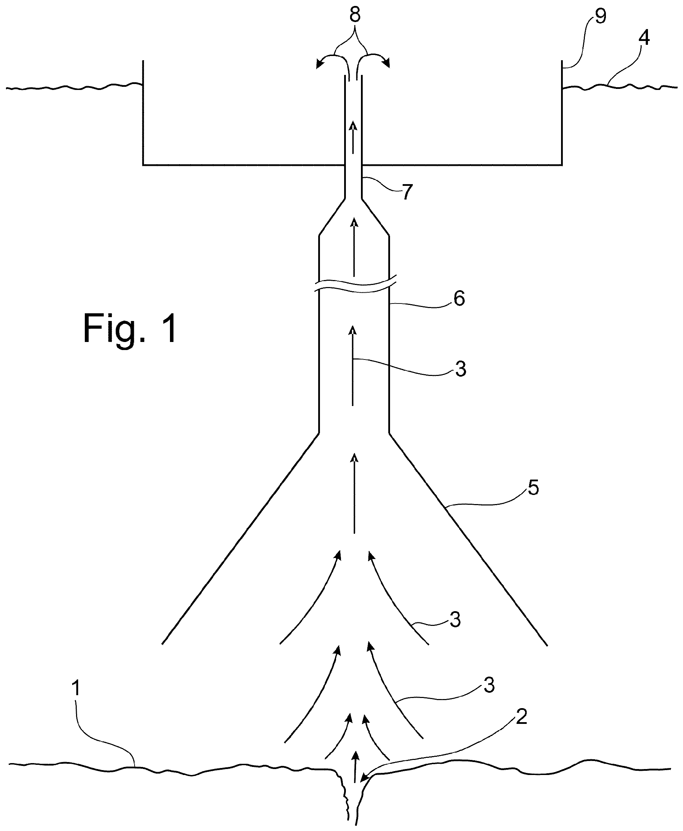

In Figur 1 ist ein Meeresboden 1 gezeigt, aus dem aus einer Spalte 2 ölreiche Flüssigkeit austritt, Pfeile 3.

Die ölreiche Flüssigkeit bewegt sich aufgrund ihrer geringeren Dichte innerhalb des Wassers oberhalb des Meeresbodens 1 nach oben in Richtung Wasseroberfläche 4.

Zwischen Meeresboden 1 und Wasseroberfläche 4 ist oberhalb der Spalte 2 ein Trichterkörper 5 angeordnet. Diese Anordnung erfolgt mit der Trichteröffnung in Richtung Meeresboden 1, so dass die ölreiche Flüssigkeit entlang der Pfeile 3 in den Trichterkörper 5 eintreten kann und in diesem in Richtung Wasseroberfläche 4 geführt wird. Diese Führung erfolgt über eine Flüssigkeitsabführleitung 6, mit der der Trichterkörper 5 flüssigkeitsleitend verbunden ist.

Die Flüssigkeitsabführleitung 6 hat in der Nähe der Wasseroberfläche 4 einen verengten Abschnitt 7. Die durch den verengten Abschnitt 7 fließende ölreiche Flüssigkeit tritt aus der Flüssigkeitsabführleitung 6, 7 entlang der Pfeile 8 aus und wird in einem auf der Wasseroberfläche 4 schwimmenden Auffangbehälter 9 gesammelt.

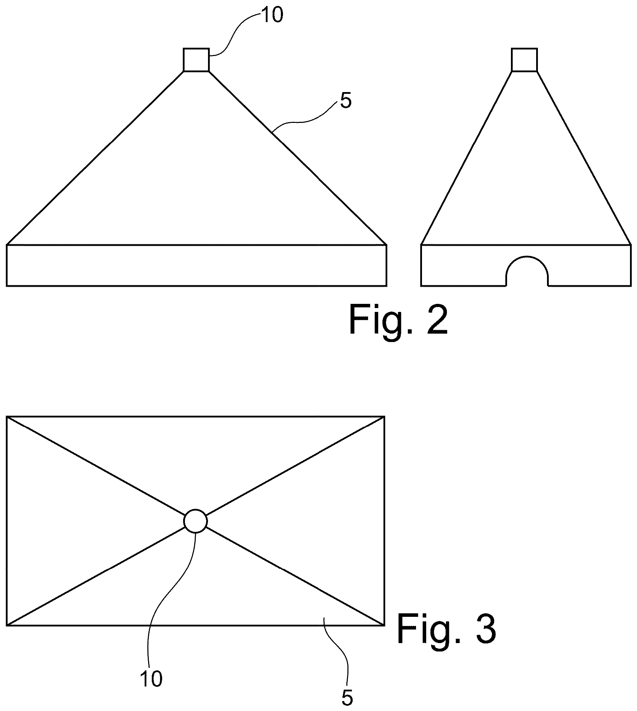

Figur 2 und 3 zeigen die Ausbildung des Trichterkörpers 5. Dieser kann aus Metall oder aus einem Kunststoff gefertigt sein. Oberhalb der Trichterwände ist ein Anschluss 10 für die Flüssigkeitsabführleitung 6 angeordnet. Der Durchmesser des Anschlusses kann 1 Meter betragen, während der Trichterkörper 5 eine entsprechende Ausbildung mit Kantenlängen von mehreren Metern hat.

## Patentansprüche

1. Vorrichtung zum Aufnehmen von ölreichen Flüssigkeiten von zumindest einer Austrittsstelle unterhalb einer Wasseroberfläche,
**dadurch gekennzeichnet,**
**dass** sie zumindest einen Trichterkörper (5) aufweist, dessen seiner Öffnung abgewandter verengter Abschnitt mit zumindest einer Flüssigkeitsabführleitung (6) flüssigkeitsleitend verbunden ist.

2. Vorrichtung nach Anspruch 1, **dadurch gekennzeichnet, dass** die Flüssigkeitsabführleitung (6) als Saugleitung ausgebildet ist.

3. Vorrichtung nach Anspruch 1 oder 2, **dadurch gekennzeichnet, dass** die Flüssigkeitsabführleitung (6) bis zur Wasseroberfläche (4) geführt ist und dass sich der Durchmesser der Flüssigkeitsabführleitung (6) vor Erreichen der Wasseroberfläche (4) verengt.

4. Vorrichtung nach Anspruch 1 bis 3, **dadurch gekennzeichnet, dass** die Flüssigkeitsabführleitung (6) bis zu zumindest einem auf der Wasseroberfläche (4) angeordneten Auffangbehälter (9) geführt ist.

5. Vorrichtung nach einem der vorhergehenden Ansprüche, **dadurch gekennzeichnet, dass** die Wände des Trichterkörpers (5) aus einem Kunststoff oder aus einem Metall gefertigt sind.

6. Vorrichtung nach einem der vorhergehenden Ansprüche, **dadurch gekennzeichnet, dass** der Trichterkörper (5) zumindest einen Ansatzpunkt für ein Seil und/oder eine Kette hat.
